(19) Europäisches Patentamt
European Patent Office
Office européen des brevets

(11) Publication number: **0 672 713 A1**

(12) # EUROPEAN PATENT APPLICATION

(21) Application number: **95301782.9**

(51) Int. Cl.$^{6}$: **C08K 5/15**, C08L 21/00

(22) Date of filing: **17.03.95**

(30) Priority: **18.03.94 JP 48985/94**
**18.03.94 JP 48986/94**

(43) Date of publication of application:
**20.09.95 Bulletin 95/38**

(84) Designated Contracting States:
**AT DE FR GB IT**

(71) Applicant: **SUMITOMO CHEMICAL COMPANY LIMITED**
**5-33, Kitahama 4-chome,**
**Chuo-ku**
**Osaka-shi, Osaka 541 (JP)**

(72) Inventor: **Inui, Naoki**
**1598 Tsutsuicho**
**Yamatokoriyama-shi, Nara (JP)**
Inventor: **Iyama, Hironobu**
**1-2-40 Hirata**
**Ibaraki-shi, Osaka (JP)**
Inventor: **Tsuta, Kyoko**
**1-179 Hagiwaradainishi**
**Kawanishi-shi, Osaka (JP)**
Inventor: **Nagasaki, Hideo**
**4-7-7 Itakano Higashiyodogawaku**
**Osaka-shi, Osaka (JP)**

(74) Representative: **Cresswell, Thomas Anthony**
**J.A. KEMP & CO.**
**14 South Square**
**Gray's Inn**
**London WC1R 5LX (GB)**

(54) **A rubber composition and a method for producing a vulcanized rubber.**

(57) A method for producing a vulcanized rubber in which a flavan compound of the formula (I)

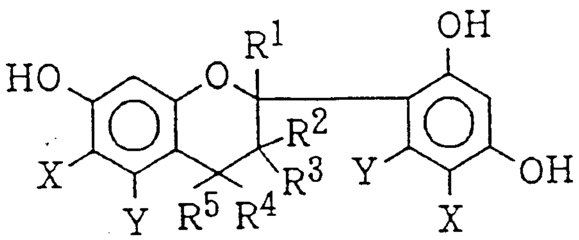

(I)

wherein $R^1$, $R^2$, $R^4$ and $R^5$ independently of one another are hydrogen or an aliphatic group having 1-6 carbon atoms, or $R^1$ and $R^2$, and/or $R^4$ and $R^5$, may form an alicyclic ring having 4-10 carbon atoms in combination, $R^3$ is hydrogen or an aliphatic group having 1-6 carbon atoms, and X and Y independently of one another are hydrogen, hydroxy or an aliphatic group having 1-8 carbon atoms; is compounded to rubber in a kneading step at a high temperature and a rubber composition which comprises the flavan compound together with cobalt carbonate or an organic cobalt compound and a methylene donor: and the vulcanized rubber produced through the method or from the rubber composition exhibits excellent rubber properties such as high hardness and free from fuming problem.

EP 0 672 713 A1

The present invention relates to a rubber composition which imparts high adhesion properties when used in a vulcanizing adhesion with a steel cord and gives a vulcanized rubber having high hardness.

The present invention also relates to a method for producing a vulcanized rubber having improved hardness and dynamic modulus of elasticity.

The present invention further relates to a tire produced from the rubber composition and/or the vulcanized rubber, and a method for improving hardness and dynamic modulus of elasticity of a rubber.

Improvement of hardness and dynamic elastic modulus of a vulcanized rubber used in rubber products such as tires, belts and hoses has often been required. For example, in order to reduce the fuel consumption, reducing the heat built-up in a rubber (hysteresis loss) due to periodic (dynamic) transformations during tire rotations has become an important subject to be solved at the tread portion and the undertread portion of a tire, which, among tire portions, mainly contribute the resistance to forces caused by rotations of the tire. As a coating rubber used for the carcass portion and bead portion of a tire, a rubber which causes little heat built-up and causes little separations of the coating rubber, which means a break caused in the coating rubber by transformations during rotations of a tire, has also been desired in order to prevent the separations of the coating rubber and to prevent a promotion of the separations due to a hysteresis loss. Such a hysteresis loss and a break in a rubber are greatly influenced by hardness and dynamic modulus of elasticity of the rubber, and, hence, improvement of hardness and dynamic modulus of elasticity has been required in order to improve such properties of rubbers as mentioned above.

Hitherto, a method of increasing an amount of a reinforcing material such as carbon black, a method of increasing the extent of vulcanization by increasing the amount of sulfur or a vulcanization accelerator have been proposed. However, these methods have drawbacks mentioned below. An increase of the amount of carbon black causes a hysteresis loss increase and a heat built-up increase. It also lowers the resistance to a break in a rubber such as blowout resistance and cut growth resistance. Furthermore, it causes a scorch. On the other hand, an increase of amount of sulfur lowers the flex cracking resistance and the heat-degradation resistance remarkably. Therefore, it is difficult to further improve hardness and dynamic modulus of elasticity of a vulcanized rubber only by increasing an amount of a reinforcing material, a vulcanization agent or a vulcanization accelerator.

Hitherto, as a method for improving hardness and dynamic modulus of elasticity of a vulcanized rubber without increasing the heat built-up and without lowering the blow-out resistance, a method of compounding resorcin into a rubber has been known. Resorcin has been widely used because it is effective to enhance hardness and dynamic modulus of elasticity of a rubber, to toughen the rubber, to reduce loss factor of a vulcanized rubber during a dynamic transformation and to reduce heat built-up. However, resorcin sublimes remarkably during the step of processing such as a kneading, which is quite undesirable to the environment and the human health, and, therefore, the use of resorcin is becoming a great social problem. Moreover, there are problems on the processing. For example, in a unvulcanized rubber where resorcin was compounded, the resorcin tends to bloom to the rubber surface, and hence, it causes a scorch and a reduction of the adhesiveness between unvulcanized rubbers. Furthermore, strength properties, such as tensile properties, of a vulcanized rubber where resorcin was compounded are inferior to those of a vulcanized rubber where resorcin was not compounded. Therefore, solutions of above-mentioned problems have been strongly desired.

In rubber products such as tires, belts and hoses which are required to be reinforced with a steel cord, the adhesion between the rubber and the steel cord also becomes a problem. For solving this problem, there have, hitherto, been known methods such as a method of brass plating or zinc plating the surface of the steel cord, a method of treating the surface of the steel cord with any of various chemical compounds and a method of compounding an adhesive together with other various compounding ingredients during the step of processing the rubber. Among them, the method of compounding an adhesive during the step of processing the rubber has been widely adopted because the method makes it possible to firmly adhere the steel cord to the rubber.

This method is called a dry bonding and generally comprises incorporating a methylene acceptor and a methylene donor which releases formaldehyde upon heating into the rubber in the step of processing to obtain an unvulcanized rubber and then adhering the unvulcanized rubber obtained to a steel cord during the vulcanization. As the methylene acceptor used for the dry bonding, there have been proposed m-substituted phenol such as resorcin or m-aminophenol, a condensation product of m-substituted phenol and an aldehyde such as formaldehyde or acetaldehyde, and a condensation product of m-substituted phenol, another mono-substituted phenol and an aldehyde.

Among them, a method in which m-substituted phenol, particularly resorcin, is used has been widely adopted because, as mentioned above, it is also effective to enhance hardness of the rubber, to improve dynamic modulus of elasticity of the rubber, to toughen the rubber, to reduce loss factor of the rubber during dynamic transformations and to reduce the heat built-up. However, this method also has disadvantages mentioned above, i.e. problems caused by the sublimation of resorcin, the blooming of resorcin to the rubber surface and

the like.

As measures to overcome the disadvantages, a condensation product of resorcin with formaldehyde has been proposed in, for example, US-A-2,746,898, JP-B-45-27463(US-A-3,596,696) and JP-B-47-7640(GB-A-1,163,594). Though some of the problems being solved to some extent, such a so called resorcin resin still has problems in fuming of resorcin and in an inferior adhesion due to the blooming of resorcin because unreacted resorcin remains in a large amount in the resorcin resin. There is also such a problem in handling that the resorcin resin tends to deliquesce and hence solidify during storage. In addition, there is such a problem that a rubber to which a resorcin resin was compounded is much inferior in hardness and dynamic modulus of elasticity to a rubber to which a resorcin resin was compounded.

In order to reduce the deliquescence and solidification, for example, JP-B-52-26275(US-A-3,963,652) and JP-B-56-37902(US-A-4,257,926) have proposed a ternary co-condensation product of resorcin, an alkylphenol and formaldehyde; a mixture of a condensation product of resorcin and formaldehyde, and a condensation product of an alkylphenol and formaldehyde; and the like. These alkylphenol-containing resorcin resins exhibit an adhesiveness and rubber properties equivalent or superior to those obtained with conventional resorcin resins, and have been improved in deliquescence and solidifiability which are the defects of the conventional resorcin resins. However, even in the above alkylphenol-containing resorcin resins, since unreacted resorcin still remains to some extent in the resin, there is a problem in the environment and the human health caused by the sublimation of the unreacted resorcin, and there is also a problem that hardness, dynamic modulus of elasticity and loss factor of the rubber where the alkylphenol-containing resorcin resin was compounded are not necessarily sufficient. Therefore, the improvements of these have been strongly desired.

In JP-A-58-147444, there is described a rubber composition containing 2,4,4-trimethyl-2',4',7-trihydroxyflavan and a compound capable of donating a methylene group upon heating, which is for solving problems in a vulcanization adhesion with a reinforcing material such as a nylon, polyester and steel cord. In the examples JP-A-58-147444, carbon black, sulfur and others are compounded to a rubber and, thereafter, 2,4,4-trimethyl-2',4',7-trihydroxyflavan as a methylene acceptor and a methylene donor are compounded thereto together with a vulcanization accelerator. However, the rubber composition is not necessarily sufficient in the vulcanizing adhesiveness. In addition, the vulcanized rubber produced from the rubber composition is not sufficient in hardness, dynamic modulus of elasticity and loss factor.

The present inventors have conducted extensive research in order to solve the above-mentioned problems and have consequently attained the present invention.

Accordingly, an object of the present invention is to provide a method for producing a vulcanized rubber having a high hardness, a high dynamic modulus of elasticity and a small loss factor.

Another, object of the present invention is to provide a rubber composition which can give a vulcanized rubber having a high hardness, a high dynamic modulus of elasticity and a small loss factor.

Another object of the present invention is to provide a method for producing a vulcanized rubber excellent in scorch resistance with substantially no reduction in rubber strengths such as tensile property, tear resistance and flex-cracking resistance by compounding a compound free from fuming problems in the.processing step such as a kneading.

Another object of the present invention is to provide a rubber composition which is free from deliquescence and solidification during the storage, and exhibits an excellent vulcanizing adhesion property to a steel cord, but gives substantially no reduction in mechanical properties to the rubber obtained from it, by compounding a compound not to sublimate during the kneading and processing steps.

Further object of the present invention is to provide a tire produced from a vulcanized rubber produced by the said method.

Further object of the present invention is to provide a tire produced from the said rubber composition.

Still further object of the present invention is to provide a method of a vulcanizing adhesion between the rubber composition and a steel cord.

Still further object of the present invention is to provide a method for improving hardness and dynamic modulus of elasticity of a vulcanized rubber.

The present invention provides a method for producing a vulcanized rubber which comprises compounding:

carbon black;

a flavan compound (Ba) of the formula (I)

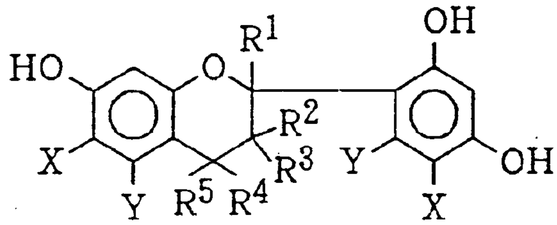

(I)

wherein $R^1$, $R^2$, $R^4$ and $R^5$, which may be the same or different, each represents hydrogen or an aliphatic group having 1-6 carbon atoms, or $R^1$ and $R^2$, and/or $R^4$ and $R^5$, together with the carbon atom to which they are attached may form an alicyclic ring having 4-10 carbon atoms, $R^3$ represents hydrogen or an aliphatic group having 1-6 carbon atoms, and X and Y, which may be the same or different each represents hydrogen, hydroxy or an aliphatic group having 1-8 carbon atoms; and

a rubber (A1) selected from natural rubber, styrene-butadiene copolymer rubber, butadiene rubber, isoprene rubber, acrylonitrile-butadiene copolymer rubber, chloroprene rubber, butyl rubber and halogenated butyl rubber; in which method the flavan compound is compounded during the kneading step conducted at a temperature of 120-180°C to obtain an unvulcanized rubber composition; and the rubber composition is then vulcanized in the presence of a vulcanization agent. (Hereinafter, this method will be denoted Method I).

The present invention also provides:

a tire produced through Method I ;

and a method for improving hardness and dynamic modulus of elasticity of a vulcanized rubber by adopting Method I .

The present invention further provides a rubber composition which comprises:

(A2) 100 parts by weight of a rubber selected from natural rubber, styrene-butadiene copolymer rubber, butadiene rubber, isoprene rubber, acrylonitrile-butadiene copolymer rubber, chloroprene rubber, butyl rubber and halogenated butyl rubber;

(Bb) 0.5-10 parts by weight of a flavan compound represented by the formula( I );

(C) 0.05-1 part by weight, as the amount of cobalt, of cobalt carbonate or an organic cobalt compound; and

(D) 0.5-6 parts by weight of a methylene donor selected from a condensation product of melamine, formaldehyde and methanol, and hexamethylenetetramine.

(Hereinafter, this rubber composition will be denoted Composition I)

The present invention still further provides:

a tire produced from Composition I ;

a method for adhering a rubber to a steel cord which comprises compounding the ingredients (Bb)-(D) to the rubber(A2) and vulcanizing the resulting composition while bringing it to contact the steel cord; and

a method for improving hardness and dynamic modulus of elasticity of the vulcanized rubber which comprises compounding the ingredients(Bb)-(D) to the rubber(A2) and vulcanizing the resulting composition.

Rubber(A1) and (A2) adopted in the present invention are selected from natural rubber, styrene-butadiene copolymer rubber, butadiene rubber, isoprene rubber, acrylonitrile-butadiene copolymer rubber, chloroprene rubber, butyl rubber and halogenated butyl rubber. They may be used singly or in combination of two or more.

A flavan compound(Ba) and (Bb) are represented by the formula ( I ). In the formula ( I ), $R^3$ is hydrogen or an aliphatic group having 1-6 carbon atoms. In the formula ( I ), $R^1$, $R^2$, $R^4$ and $R^5$ independently of one another are hydrogen or an aliphatic group having 1-6 carbon atoms, or $R^1$ and $R^2$, and/or $R^4$ and $R^5$, may form an alicyclic ring having 4-10 carbon atoms in combination. The aliphatic group as $R^1$, $R^2$, $R^3$, $R^4$ and $R^5$ is usually an alkyl group. When $R^1$ and $R^2$ form a half part of a condensation ring or when $R^4$ and $R^5$ form a half part of a spiro ring, the half part of the ring thus formed may be, for example, a cycloalkane ring having about 4-8 carbon atoms and, most usually, it is a cyclohexane ring. X and Y independently of one another are hydrogen or an aliphatic group having 1-8 carbon atoms. The aliphatic group as X or Y is usually an alkyl group too.

The flavan compound of the formula (I) can be produced according to a known method described, for example, in GB 822659, JP-A-55-139375, JP-A-61-27980 or others. For example, it can be produced by conducting a condensation reaction of resorcin or 4- and/or 5-substituted resorcin with ketone, $\alpha$ , $\beta$-unsatulated ketone, $\beta$-hydroxyketone, $\alpha$ , $\beta$-unsatulated aldehyde or $\beta$-hydroxyaldehyde in the presence of an acid catalyst in an inert solvent.

Examples of the flavan compounds (Ba) and (Bb) of the formula( I ) which are preferably used in the present invention include:

2',4',7-trihydroxyflavan, 2,4,4-trimethyl-2',4',7-trihydroxyflavan, 4-ethyl-2,3,4-trimethyl-2',4',7-trihydroxyflavan, 2,4-diethyl-4-methyl-2',4',7-trihydroxyflavan, 2,4,4-triethyl-3-methyl-2',4',7-trihydroxyflavan, 2,4-diethyl-3-isopropyl-4-isobutyl-2',4',7-trihydroxyflavan, 2,4-diisobutyl-4-methyl-2',4',7-trihydroxyflavan, 6-hydroxy-4a-(2,4-dihydroxyphenyl)-1,2,3,4,4a,9a-hexahydroxanthene-9-spiro-1'-cyclohexane [i.e. a compound of the formula( I ) in which X=Y=$R^3$=H , $R^1$ and $R^2$ form tetramethylene in combination and $R^4$ and $R^5$ form pentamethylene in combination],

2,4,4,5,6'-pentamethyl-2',4',7-trihydroxyflavan, 2,4,4-trimethyl-2',4',5',6,7-pentahydroxyflavan, 2,4,4-trimethyl-2',4',5,6',7-pentahydroxyflavan, 2,4,4-trimethyl-5',6-di-tert-butyl-2',4',7-trihydroxyflavan, and the like.

Among the flavan compounds(Ba) and (Bb) of the formula( I ), those wherein each of X and Y is hydrogen are preferably used from the view of rubber properties. Particularly, 2,4,4-trimethyl-2',4',7-trihydroxyflavan, which is obtained by a condensation of resorcin and acetone, is preferred considering the availability of raw material. Any of the flavan compounds of the formula( I ) is free from the fuming problems of resorcin during rubber processing step.

The amount of the flavan compound(Ba) to be compounded is not limited, but, in general, the range of amount is preferably 0.5-10 parts by weight per 100 parts by weight of the rubber(A1). The range of amount of the flavan compound(Bb) to be compounded is 0.5-10 parts by weight per 100 parts by weight of the rubber(A2). Hereinafter, the amount of the ingredient to be compounded is represented with a unit "phr" which means "part by weight" per 100 parts by weight of the rubber. When the amounts of the flavan compound(Ba) and (Bb) are less than 0.5 phr, sufficient effects cannot be obtained, but even if they exceed 10 phr, no more increase of effects accompanied with the increase of amount cannot be expected, and, hence, it is economically disadvantageous. Preferably, the amount range of (Ba) and (Bb) are 0.5-3 phr.

In Method I , such kind of carbon black usually used in the rubber industry as SAF, ISAF, HAF, FEF, SRF, GPF, MT and the like may be used. The compounding amount of the carbon black is not limited but, in view of reinforcibility, hardness of rubber, heat build-up and dynamic durability, a range of 20-150 phr is preferred. If desired, a filler other than carbon black may also be compounded. The filler includes various fillers usually used in the rubber industry, for example, inorganic fillers such as silica, clay and calcium carbonate. Particularly, in a method for producing a vulcanized rubber, such as a coating rubber used in a carcass portion of a tire, which is to be adhered to a reinforcing material such as an organic fiber cord, a hydrated silica is preferably compounded in order to improve adhesiveness between the rubber and the reinforcing material. The amount of the hydrated silica to be compounded is preferably in a range of 5 - 40 phr.

Generally, in kneading a rubber composition, carbon black and other fillers, process oil, stearic acid and the like are compounded during the first step wherein the rubber temperature is about 120-180 °C ; and vulcanization accelerators, vulcanization retarders, crosslinking agents and the like are compounded during the second step wherein rubber temperature is about 40-120°C.

In Method I , the time when the flavan compound(Ba) is added is important and it must be added to the rubber during the first step wherein the rubber temperature is relatively high. By adding the flavan compound(Ba) during the first step, great improvement in the rubber properties such as hardness and dynamic modulus of elasticity can be attained comparing to the case wherein (Ba) is added during the second step. Usually, temperature in the first step where the flavan compound(Ba) is added is preferably 130-180°C, because higher the temperature, more improvement in rubber properties can be attained. After adding carbon black and the flavan compound(Ba) in the first kneading step of relatively high temperature, a vulcanization agent such as sulfur is compounded at a lower temperature, for example, of 40-120°C, and, if necessary, a vulcanization accelerator is compounded, and, then, vulcanization is conducted. The amount of sulfur is usually about 1-10phr.

Kind of the mixer used for the first kneading step and the second kneading step are not limited and those usually used in the rubber industry such as a Banbury mixer, a kneader and an open mill can be used. Different kinds of mixers can be used in the first step and the second step.

In Method I , a methylene donor which is usually used in the rubber industry together with a methylene acceptor such as resorcin may be compounded in addition. Examples of the methylene donor include a condensation product of melamine and formaldehyde such as dimethylol melamine, trimethylol melamine, tetramethylol melamine and hexamethylol melamine, a condensation product of melamine, formaldehyde and methanol such as hexakis(methoxymethyl) melamine and pentakis(methoxymethyl)methylol melamine, and hexamethylenetetramine. They are used singly or in combination of two or more. Among them, the condensation product of melamine, formaldehyde and methanol is preferred. The amount of the methylene donor, is preferably is in a range of about 0.5-6 phr. When the amount of the methylene donor is less than 0.5 phr, hardness of the rubber obtained by this method is not improved very effectively. On the other hand, if it exceeds 6 phr, elongation at break, tensile strength and tensile stress of the rubber are lowered, and the retention of tensile strength and tensile stress after a heat degradation are also lowered. Hence, exceeding 6 phr is not preferred.

The methylene donor is usually compounded in the second step of relatively low temperature.

In Method I , one or more kinds of various rubber chemicals which are usually used in the rubber industry, for example, antidegradants such as antioxidants and antiozonants, vulcanizing agents, cross-linking agents, vulcanization accelerators, retarders, peptizers, tackifiers, processing aids, waxes, oils, stearic acid and the like may be used in addition, if necessary. The amount of the rubber chemicals varies depending on their intended use, but is in a range in which the rubber chemicals are usually used in the rubber industry.

It is preferred that at least one kind of antidegradants selected from N-phenyl-N'-1,3-dimethylbutyl-p-phenylenediamine and a polymerized compound of 2,2,4-trimethyl-1,2-dihydroquinoline is compounded. The amount of the antidegradant is usually in the range of 0.5-3 phr.

In the vulcanization in Method I , the optimum conditions may be adopted according to the kind of the base rubber and the kind of the compounding ingredients. The vulcanization conditions per se may be those which have been heretofore been generally adopted in the rubber industry and are not limited in this invention.

The vulcanized rubber produced by Method I exhibits excellent effects when it is applied to a portion of tires or other rubber products. For example, applying Method I for producing portions of tires such as tread portions, carcass portions, sidewall portions and bead portions, tires having excellent properties can be produced.

The organic cobalt compound(C) used in Composition I , may be, for example, a cobalt salt of an organic acid or an organic cobalt complex.

Examples of a cobalt salt of an organic acid include a cobalt salt of a fatty acid, preferably a fatty acid having 3-30 carbon atoms, more preferably a fatty acid having 4-20 carbon atoms; such as cobalt stearate and cobalt propionate; cobalt naphthenate; cobalt benzoate; cobalt p-hydroxybenzoate; cobalt salt of rhodinic acid; and a compound represented by the following formula:

$$(R-\underset{\underset{O}{\|}}{C}O-Co-O)_3-B$$

wherein R is an aliphatic group, preferably alkyl having up to 20 carbon atoms, more preferably alkyl having 6-14 carbon atoms, (such as "MANOBOND C CP420" and "MANOBOND C 680C" manufactured by Manchem. Co., Ltd.). Examples of an organic cobalt complex include cobalt acetyl acetonate and acetylacetoanilide - cobalt complex. Among the cobalt carbonate or organic cobalt compound, cobalt carbonate (II) is preferably used. The amount of the organic cobalt compound is in a range of 0.05 - 1 phr as the amount of cobalt. When the amount, as the amount of cobalt, is less than 0.05 phr, a sufficient adhesive property to a steel cord cannot be obtained. More han 1 phr is not preferred, because heat resistance and flex cracking resistance are lowered.

The methylene donor(D) used in Composition I is selected from a condensation product of melamine, formaldehyde and methanol, and hexamthylenetetramine. They are used singly or in combination. Among them, the condensation products of melamine, formaldehyde and methanol include those usually used in the rubber industry such as hexakis(methoxymethyl)melamine, pentakis(methoxymethyl) methylol melamine and tetrakis(methoxymethyl)dimethylol melamine. Among them, hexakis(methoxymethyl)melamine or a mixture containing the same as a major ingredient is preferred. The amount of the methylene donor(D) is in a range of 0.5-6 phr, preferably about 1-4 phr. When the amount of the methylene donor(D) is less than 0.5 phr, the adhesiveness is not improved effectively and hardness of vulcanized rubber produced from the rubber composition is not improved very effectively. On the other hand, an amount exceeding 6 phr is not preferred, because if the amount exceeds 6 phr, elongation at break of the vulcanized rubber is lowered, and the retention of tensile strength and tensile stress after a heat degradation is also lowered.

By using the ingredients(Bb)-(D) explained above together with the rubber(A2), for example, there can be attained an excellent adhesiveness of the vulcanized rubber to a steel cord, which cannot be attained without(C) i.e. by a combination of a rubber, a flavan compound and a methylene donor. In addition, hardness, dynamic modulus of elasticity and loss factor of the vulcanized rubber are greatly improved. Particularly, adhesiveness between the rubber and a steel cord and dynamic modulus of elasticity thus attained are almost superior to those attained from a conventionaly known rubber composition in which resorcin was compounded.

Therefore, Composition I is very effective for a vulcanizing adhesion between a rubber and a steel cord. Examples of the steel cord adhered to the rubber include a brass-plated steel cord and a zinc-plated steel cord. Two or more kinds of steel cords can be used together, although reinforcement can be attained by using one kind of steel cords. Particularly, Composition I gives an excellent adhesiveness between the rubber and a brass-plated steel cord.

Composition I may further contain a reinforcing material and/or a filler, if necessary. Any reinforcing materials and fillers usually used in the rubber industry can be used in Composition I . For example, a reinforcing material such as carbon black and an inorganic filler such as silica, clay and calcium carbonate can be used. Among them, carbon black is preferably compounded in view of reinforcibility, hardness of rubber, heat build-up and dynamic durability, particularly in view of hardness of rubber, and such kind of carbon black usually used in the rubber industry as SAF, ISAF, HAF, FEF, SRF, GPF, MT and the like can be used. The compounding amount of the reinforcing material and/or the filler is preferably in a range of 20 - 150 phr, more preferably in a range of 40 - 80 phr. Furthermore, separately from carbon black or together with carbon black, hydrated silica is also preferably compounded in order to improve the adhesiveness.

An amount of the hydrated silica to be compounded is preferably in a range of 5 - 40 phr.

In Composition I , one or more kinds of various rubber chemicals which are usually used in the rubber industry, for example, antidegradants such as antioxidants and antiozonants, vulcanization agents, cross-linking agents, vulcanization accelerators, retarders, peptizers, tackifiers, processing aids, waxes, oils, stearic acid and the like, can be used in addition, if necessary. The amount of the rubber chemicals varies depending on their intended use, but is in a range in which the rubber chemicals are usually used in the rubber industry.

Particularly, benzothiazole vulcanization accelerators such as 2-mercaptobenzothiazole, dibenzothiazyl, disulfide, N-alkylsubstituted benzothiazylsulfenamide, N-cycloalkylsubstituted benzothiazylsulfenamide, N-alkylsubstituted benzothiazylsulf enimide and N-cycloalkylsubstituted benzothiazylsulfenimide are preferably used, because improvement of the adhesiveness can be expected by compounding the same and carrying out the vulcanization. The number of the N-substitutedalkyl or N-substitutedcycloalkyl in the N-alkyl- or N-cycloalkylsubstituted benzothiazylsulfenamide may be one or two. When two alkyl groups are linked at the N-position, they may form a morpholine ring together with the nitrogen atom. The alkyl group substituted at the N-position may be a straight chain, a branched chain. Examples of N-alkyl- or N-cycloalkylsubstituted benzothiazylsulfenamide include N-cyclohexyl-2-benzothiazylsulfenamide, N-tert-butyl-2-benzothiazylsulfenamide, N-amyl-2-benzothiazylsulfenamide, N-oxydiethylene-2-benzothiazylsulfenamide and N,N'-dicyclohexyl-2-benzothiazylsulfenamide. Examples of N-alkyl- or N-cycloalkylsubstituted benzothiazylsulfenimide include N-tert-butyl-2-benzothiazylsulfenimide and N-cyclohexyl-2-benzothiazylsulfenamide. Among them, N,N'-dicyclohexyl-2-benzothiazylsulfenamide is preferred in view of the improvement of hardness and adhesiveness. The compounding amount of the vulcanization accelerators, particularly benzothiazole vulcanization accelerators, is preferably in a range of 0.1 - 4 phr.

In Composition I , it is preferred that at least one kind of antidegradants selected from N-phenyl-N'-1,3-dimethylbutyl-p-phenylenediamine and 2,2,4-trimethyl-1,2-dihydroquinoline is compounded. The amount of the antidegradant is usually in a range of 0.5-3 phr.

After a vulcanizing agent, preferably sulfur, was compounded, the rubber composition of the present invention is usually vulcanized. In most case, the vulcanization is carried out in contact with a steel cord. Sulfur as a vulcanizing agent may be an insoluble sulfur or one of various soluble sulfurs which is usually used in the rubber industry. The amount of the sulfur compounded is usualy in a range of about 1-10 phr. An insoluble sulfur is preferably compounded in view of the improvement of the adhesiveness to a steel cord, and the amount is preferably about 4-10 phr.

Composition I thus prepared exhibits excellent effects when it is applied to a portion of a tire or other rubber products, particularly to a portion to be reinforced with a steel cord. For example, Composition I is applied to a carcass portion, a bead portion or the like which is a portion of a tire to be reinforced with a steel cord. The portion where Composition I is applied to is subjected to a molding and a vulcanization in contact with a steel cord in the same manner as conducted usually in the tire industry to produce a tire.

In a vulcanization in contact with a steel cord, the optimum conditions may be adopted according to the kind of the base rubber and the kind of the compounding ingredients. Even when the vulcanization is carried out without contacting a steel cord, a vulcanized rubber excellent in hardness and dynamic modulus of elasticity can be obtained from Composition I . The vulcanization conditions per se may be those which have been heretofore been generally adopted and are not limited in this invention.

## EXAMPLES

The present invention is explained in detail below referring to Examples, but the present invention is never limited to these Examples. In the Examples, "%" and "parts" for expressing an added amount and a content are "% by weight" and "parts by weight" respectively unless otherwise mentioned.

Flavan compounds(Ba) and (Bb) used in the Examples and the methylene acceptor used in the Comparative examples are the following, which are denoted in Examples by the symbols mentioned below.

B1 : 2,4,4-trimethyl-2'4'7-trihydroxyflavan

B2 : 2,4-diethyl-4-methyl-2'4'7-trihydroxyflavan

B3 : 2,4,4-trimethyl-3-methyl-2'4'7-trihydroxyflavan
B4 : 2,4-diisobutyl-4-methyl-2'4'7-trihydroxyflavan
B5 : 6-hydroxy-4a-(2,4-dihydroxyphenyl)-1,2,3,4.4a,9a-hexahydroxanthene-9-spiro-1'-cyclohexane
X : resorcin

Example 1

<Compounding recipe>

| | |
|---|---|
| Natural rubber (RSS#1) | 100 parts |
| HAF carbon black (N330) | 45 parts |
| Stearic acid | 3 parts |
| Hydrated silica (Nispil AQ manufactured by Nippon Silica Kogyo) | 10 parts |
| Zinc oxide | 5 parts |
| Antidegradant(N-phenyl-N'-1,3-dimethylbutyl p-phenylene diamine) | 2 parts |
| Test compound : described in Table 1 | 2 parts |
| Vulcanization accelerator (N-cyclohexyl-2-benzothiazylsulfenamide) | 1 part |
| Sulfur | 2 parts |
| Methoxylated methylolmelamine resin (Sumikanol 507 manufactured by Sumitomo Chemical Co., Ltd.) | 4 parts |

A 600-ml Laboplastomill manufactured by Toyo Seiki Seisakusho was used as a Banbury mixer and the natural rubber, carbon black, stearic acid, hydrated silica, zinc oxide, the antidegradant and the test compound were added thereto according to the above compounding recipe at an oil bath temperature of 150°C, and they were kneaded at a mixer rotation rate of 50 rpm. for 15 minutes.(The first step) The temperature of the rubber at this step was 155-165 °C.

Subsequently, the compounded rubber composition was transferred to an open mill, then the vulcanization accelerator, sulfur and the methoxylated methylolmelamine resin were added thereto according to the above compounding recipe , and the resulting composition was kneaded(The second step) to obtain a test sample. The temperature of the rubber at this step was 50-70 °C.

A test sample for a comparison was also prepared according to the same manner mentioned-above except that the test compound was not added during the first step, wherein a Banbury mixer was used, but was added and kneaded together with the vulcanization accelerator, sulfur and the methoxylated methylolmelamine resin during the second step wherein an open mill was used.

A part of the test sample thus prepared was subjected to Mooney scorch test. The remaining test sample was shaped into a prescribed shape and vulcanized at 145 °C for 30 minutes to prepare a test piece for Dynamic viscoelasticity test, Hardness test and Tensile property test. Each test was conducted according to the following manner and the results are shown in Table 1.

Mooney scorch test

The rubber compound before a vulcanization was subjected to Mooney scorch test according to JIS K 6300 to determine Mooney scorch time($t_5$), which is a time required for raising 5 points from the lowest value at 125 °C. Longer Mooney scorch time indicates that it is difficult to scorch and has an excellent processability.

Dynamic viscoelasticity test

As a dynamic viscoelasticity tester, a viscoelasticity spectrometer F- III , manufactured by Iwamoto Seisakusho Co., Ltd., was used and dynamic modulus of elasticity(E') and loss factor(tanδ ) were measured at the initial load of 100g, the dynamic load of 20g, the frequency of 10Hz and the temperature of 60 °C. The larger value of dynamic modulus of elasticity(E') indicates a superior toughening effect and the smaller value

of loss factor(tan δ ) indicates a smaller heat built-up and a superior blowout resistance.

Hardness test

According to JIS K 6301, using a right cylinder-shaped sample having a thickness of 12.7 mm, hardness was measured by a spring type hardness tester (A type).

Tensile property test

According to JIS K 6301, using dumbbell No.3 test pieces, tensile strength, elongation at break and $M_{300}$ as tensile stress were measured. The larger values of tensile strength, elongation at break and tensile stress indicate a superior tensile property.

Table 1 -1 Results in Example 1

| Run No. | Test Compound: Kind of compound | Test Compound: Amount (parts) | Test Compound: *1 | Test Compound: *2 | Mooney-scorch time ($t_5$) (min.) | Dynamic viscoelasticity at 60℃: E' (MPa) | Dynamic viscoelasticity at 60℃: tan δ | Hard-ness | Tensile Properties: Tensile Strength (MPa) | Tensile Properties: Elonga-tion at break (%) | Tensile Properties: $M_{300}$ (MPa) |
|---|---|---|---|---|---|---|---|---|---|---|---|
| Example of the present invention | | | | | | | | | | | |
| 1 | B1 | 2 | 1st | 4 | 17.9 | 20.3 | 0.067 | 75 | 23.8 | 450 | 15.2 |
| 2 | B2 | 2 | 1st | 4 | 18.1 | 19.7 | 0.069 | 74 | 23.9 | 450 | 15.3 |
| 3 | B3 | 2 | 1st | 4 | 18.0 | 19.5 | 0.070 | 74 | 24.2 | 460 | 14.9 |
| 4 | B4 | 2 | 1st | 4 | 18.1 | 19.3 | 0.071 | 74 | 24.0 | 450 | 14.9 |
| 5 | B5 | 2 | 1st | 4 | 18.1 | 20.1 | 0.069 | 74 | 24.0 | 450 | 15.1 |

to be continued

Table 1 -2 Results in Example 1

| Run No. | Test Compound: Kind of compound | Amount *1 (parts) | *2 | Mooney-scorch time ($t_5$) (min.) | Dynamic viscoelasticity at 60°C: E' (MPa) | tan δ | Hard-ness | Tensile Properties: Tensile Strength (MPa) | Elonga-tion at break (%) | $M_{300}$ (MPa) |
|---|---|---|---|---|---|---|---|---|---|---|
| Comparison | | | | | | | | | | |
| 6 | — not compounded — | | | 18.0 | 10.2 | 0.100 | 65 | 24.6 | 470 | 14.1 |
| 7 | X | 2 | 1st | 4 | 13.0 | 19.0 | 0.071 | 74 | 21.6 | 410 | 15.0 |
| 8 | B1 | 2 | 2nd | 4 | 18.0 | 14.3 | 0.088 | 69 | 24.0 | 450 | 14.1 |
| 9 | B2 | 2 | 2nd | 4 | 18.2 | 13.5 | 0.094 | 68 | 23.8 | 450 | 14.0 |
| 10 | B3 | 2 | 2nd | 4 | 18.0 | 14.0 | 0.092 | 67 | 23.9 | 450 | 14.1 |
| 11 | B4 | 2 | 2nd | 4 | 18.2 | 14.1 | 0.089 | 68 | 23.7 | 440 | 14.0 |
| 12 | B5 | 2 | 2nd | 4 | 18.1 | 14.2 | 0.088 | 69 | 24.0 | 450 | 14.1 |

*1 : Kneading step when the test compound was compounded.

1st : compounded in the first step, 2nd : compounded in the second step

*2 : Amount of the methoxylated methylolmelamine (parts)

Example 2

<Compounding recipe>

| | |
|---|---|
| Natural rubber (RSS#3) | 100 parts |
| ISAF carbon black (N220) | 50 parts |
| Stearic acid | 1 parts |
| Zinc oxide | 5 parts |
| Aromatic oil | 5 part |
| Antidegradant(polymerized compound of 2,2,4-trimethyl-1,2-dihydroquinoline) | 2 parts |
| Test compound : described in Table 2 | 1.5 parts |
| Vulcanization accelerator (N,N-dicyclohexyl-2-benzothiazylsulfenamide) | 1.25part |
| Sulfur | 1.5 parts |
| Methoxylated methylolmelamine resin (Sumikanol 507 manufactured by Sumitomo Chemical Co., Ltd.) | described in Table 2 |

A 600-ml Laboplastomill manufactured by Toyo Seiki Seisakusho was used as a Banbury mixer and the natural rubber, carbon black, stearic acid, zinc oxide, aromatic oil, the antidegradant and the test compound were added thereto according to the above compounding recipe at an oil bath temperature of 150 °C, and they were kneaded at a mixer rotation rate of 50 rpm. for 15 minutes.(The first step) The temperature of the rubber at this step was 155-160 °C.

Subsequently, the compounded rubber composition was transferred to an open mill, then the vulcanization accelerator, sulfur and the methoxylated methylolmelamine resin were added thereto according to the above compounding recipe , and the resulting composition was kneaded(The second step) to obtain a test sample. The temperature of the rubber at this step was 50-70 °C.

A test sample for a comparison was also prepared according to the same manner mentioned-above except that the test compound was not added in the first step, wherein a Banbury mixer was used, but was added and kneaded in the second step, wherein an open mill was used, together with the vulcanization accelerator, sulfur and the methoxylated methylolmelamine resin.

A part of the test sample thus prepared was subjected to Mooney scorch test. The remaining test sample was shaped into a prescribed shape and vulcanized at 150 °C for 35 minutes to prepare a test piece for Dynamic viscoelasticity test, Hardness test and Tensile property test. Dynamic viscoelasticity test was conducted according to the following manner. Mooney scorch test was conducted according to the same manner as the test conducted in Example 1 except that the measuring temperature was 135 °C. Hardness test and Tensile property test were conducted according to the same manners as the tests conducted in Example 1. The results are shown in Table 2.

Dynamic viscoelasticity test

As a dynamic viscoelasticity tester, a viscoelasticity spectrometer F- III , manufactured by Iwamoto Seisakusho Co., Ltd., was used and dynamic modulus of elasticity(E') and loss factor(tan δ ) were measured at the initial strain of 10%, the amplitude of dynamic strain of 0.5%, the frequency of 10Hz and the temperature of 60°C. The larger value of dynamic modulus of elasticity(E') indicates a superior toughening effect and the smaller value of loss factor(tan δ ) indicates a smaller heat built-up and a superior blowout resistance.

Table 2 Results in Example 2

| Run No. | Test Compound: Kind of compound | Amount (parts) | *1 | *2 | Mooney-scorch time ($t_5$) (min.) | Dynamic viscoelasticity at 60℃: E' (MPa) | tan δ | Hardness | Tensile Properties: Tensile Strength (MPa) | Elongation at break (%) | $M_{300}$ (MPa) |
|---|---|---|---|---|---|---|---|---|---|---|---|
| Examples of the present invention | | | | | | | | | | | |
| 1 | B1 | 1.5 | 1st | 2 | 49.9 | 17.5 | 0.117 | 69 | 22.5 | 480 | 12.5 |
| 2 | B1 | 1.5 | 1st | 4 | 49.3 | 19.6 | 0.113 | 73 | 22.7 | 460 | 14.0 |
| 3 | B5 | 1.5 | 1st | 2 | 50.3 | 17.3 | 0.119 | 69 | 22.4 | 480 | 12.4 |
| Comparison | | | | | | | | | | | |
| 4 | —not compounded— | | | | 50.5 | 9.7 | 0.132 | 60 | 22.2 | 510 | 10.7 |
| 5 | X | 1.5 | 1st | 2 | 44.2 | 14.7 | 0.122 | 69 | 20.5 | 450 | 11.7 |
| 6 | B1 | 1.5 | 2nd | 2 | 49.7 | 13.2 | 0.127 | 64 | 22.5 | 480 | 11.0 |
| 7 | B5 | 1.5 | 2nd | 2 | 50.4 | 13.0 | 0.129 | 63 | 22.3 | 490 | 10.8 |

*1 : Kneading step when the test compound was compounded.

1st : compounded in the first step, 2nd : compounded in the second step

*2 : Amount of the methoxylated methylolmelamine (parts)

Example 3 - 7

<Compounding recipe>

| | |
|---|---|
| Natural rubber (RSS #1) | 100 parts |
| HAF carbon black (N330) | 45 parts |
| Stearic acid | 3 parts |
| Hydrated silica (Nispil AQ manufactured by Nippon Silica Kogyo) | 10 parts |
| Zinc oxide | 5 parts |
| Antidegradant(polymerized product of 2,2,4-trimethy l-1,2-dihydroquinoline) | 2 parts |
| Flavan compound : ingredient(B) | 2 parts |
| Vulcanization accelerator (N,N-dicyclohexyl-2-benzothiazylsulfenamide) | 0.7 part |
| Sulfur | 4 parts |
| Cobalt naphthenate(cobalt content is 11%) : ingredient(C) | 2 parts |
| Methoxylated methylolmelamine resin : ingredient(D) | 4 parts |
| (Sumikanol 507 manufactured by Sumitomo Chemical Co., Ltd.) | |

A 600-ml Laboplastomill manufactured by Toyo Seiki Seisakusho was used as a Banbury mixer and the natural rubber, carbon black, stearic acid, hydrated silica, zinc oxide, the antidegradant and the flavan compound(B) were added thereto according to the above compounding recipe at an oil bath temperature of 150 °C, and they were kneaded at a mixer rotation rate of 50 rpm. for 15 minutes. The temperature of the rubber at this time was 145-160 °C.

Subsequently, the compounded rubber was transferred to an open mill, then the vulcanization accelerator, sulfur, cobalt naphthenate and the methoxylated methylolmelamine resin were added thereto, and the resulting mixture was kneaded.

After the kneading, from a part of the test sample, a test piece in which a brass-plated steel cord was embedded was prepared for Adhesiveness test and vulcanized at 150°C for 30 minutes by a vulcanizing press. Another test piece for Dynamic viscoelasticity test, Hardness test and Tensile property test was prepared by shaping the remaining test sample into a prescribed shape, followed by a vulcanization at 150 °C for 30 minutes. Following tests were conducted using each of the test pieces thus prepared. Adhesiveness test was conducted according to the following manner. Dynamic viscoelasticity test, Hardness test and Tensile property test were conducted according to the same manners as the tests conducted in Example 1. The results are shown in Table 3.

Adhesiveness test

The rubber compound before vulcanization was brought to contact with a brass-plated steel cord and vulcanized. Then, the adhesiveness was evaluated according to the H test described in ASTM D 2138. The result was indicated by the average value of the results obtained from 12 test pieces.

Table 3 Results in Example 3-7

| Example No. | Kind of Ingredient (B) | Adhesive -ness (N) | Dynamic viscoelasticity at 60°C | | Hardness | Tensile Properties | | |
|---|---|---|---|---|---|---|---|---|
| | | | E' (MPa) | tan δ | | Tensile Strength (MPa) | Elongation at break (%) | $M_{300}$ (MPa) |
| 3 | B1 | 280.8 | 42.9 | 0.061 | 83.7 | 23.73 | 440 | 17.36 |
| 4 | B2 | 281.1 | 41.6 | 0.063 | 83.0 | 23.26 | 420 | 17.29 |
| 5 | B3 | 279.8 | 42.9 | 0.062 | 84.1 | 22.55 | 420 | 17.18 |
| 6 | B4 | 279.5 | 40.9 | 0.064 | 83.5 | 23.44 | 430 | 17.29 |
| 7 | B5 | 280.4 | 41.5 | 0.062 | 83.2 | 23.69 | 430 | 17.27 |

Comparative Example 1

Example 3 was repeated except that the ingredients (B),(C) and (D) were not used. The results are shown in Table 4.

Comparative Example 2-7

Example 3 or Example 7 was repeated except that one or two of the ingredients (C) and (D) were not used. The results are shown in Table 4.

Comparative Example 8

Example 3 or Example 7 was repeated except that the ingredients(B), flavan compound, was replaced by resorcin(compound X). The results are shown in Table 4.

Table 4 Results in Comparative Example 1-8

| Comparative Example No. | Kind of Ingredient (B)-(D) | Adhesiveness (N) | Dynamic viscoelasticity at 60°C: E' (MPa) | Dynamic viscoelasticity at 60°C: tan δ | Hardness | Tensile Properties: Tensile Strength (MPa) | Tensile Properties: Elongation at break (%) | Tensile Properties: $M_{300}$ (MPa) |
|---|---|---|---|---|---|---|---|---|
| 1 | not compounded | 205.5 | 9.2 | 0.109 | 68.7 | 26.68 | 500 | 13.34 |
| 2 | B1 only | 215.1 | 15.8 | 0.079 | 75.0 | 24.58 | 460 | 13.40 |
| 3 | B1 + C | 245.8 | 20.9 | 0.099 | 77.1 | 24.06 | 420 | 13.00 |
| 4 | B1 + D | 225.5 | 29.8 | 0.071 | 79.5 | 23.80 | 430 | 14.01 |
| 5 | B5 only | 209.4 | 10.9 | 0.084 | 73.3 | 24.14 | 440 | 13.11 |
| 6 | B5 + C | 238.8 | 17.9 | 0.104 | 75.5 | 23.00 | 420 | 13.85 |
| 7 | B5 + D | 220.0 | 25.5 | 0.082 | 76.2 | 23.92 | 430 | 13.26 |
| 8 | X + C + D | 249.9 | 30.1 | 0.068 | 80.3 | 21.89 | 410 | 16.44 |

Ingredient(C) : Cobalt naphthenate

Ingredient(D) : Methoxylated methylolmelamine resin

Example 8 (Evaluation of fuming)

Fuming of the flavan compounds B1-B5 and the compound X (resorcin used for a comparison) were evaluated by the following manner. About 3g of each compound was put into a sample bottle and, after heating at

145 °C or at 180 °C for 6 hours in a constant temperature bath, the weight retention ratio of each sample was measured. The results are shown in Table 5

Table 5

| | heating temperature | TEST COMPOUND | | | | | |
|---|---|---|---|---|---|---|---|
| | | B1 | B2 | B3 | B4 | B5 | X |
| weight retention ratio | 145°C | 100.0 | 100.0 | 100.0 | 100.0 | 100.0 | 98.1 |
| | 180°C | 99.5 | 99.5 | 99.5 | 99.5 | 99.6 | 91.8 |

As shown in Table 5, fuming of the flavan compounds of the present invention is less than that of resorcin.

According to the present invention(Method I ), in which specific flavan compounds are used and they are compounded to rubbers together with carbon black in a kneading step conducted at high temperature, a vulcanized rubber having high hardness and high dynamic modulus of elasticity can be produced. The fuming problem, which is a disadvantage of the conventional method wherein resorcin is used instead of the flavan compound, was solved. The vulcanized rubber produced according to the present invention(Method I ) is good in rubber strength such as tensile properties and scorch resistance. Therefore, vulcanized rubber products of high quality can be produced according to this method.

The rubber composition of the present invention(Composition I ) comprises a flavan compound which is free from fuming at processing steps such as a kneading and a vulcanization, and gives a vulcanized rubber having excellent properties in the vulcanizing adhesion to a steel cord. The vulcanized rubber obtained from it not only exhibits high hardness and toughness but also, in a dynamic transformation, exhibits high modulus of elasticity and small loss factor which indicate excellent toughening effects in a dynamic state. Accordingly, applying the rubber composition to a material to be reinforced with a steel cord, a rubber product having high qualities can be obtained.

## Claims

1. A method for producing a vulcanized rubber which comprises compounding:
   carbon black;
   a flavan compound (Ba) of the formula (I) :

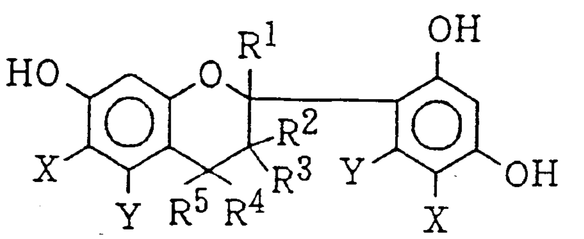

(I)

wherein $R^1$, $R^2$, $R^4$ and $R^5$, which may be the same or different, each represents hydrogen or an aliphatic group having 1-6 carbon atoms, or $R^1$ and $R^2$, and/or $R^4$ and $R^5$, together with the carbon atom to which they are attached may form an alicyclic ring having 4-10 carbon atoms, $R^3$ represents hydrogen or an aliphatic group having 1-6 carbon atoms, and X and Y, which may be the same or different, each represents hydrogen, hydroxy or an aliphatic group having 1-8 carbon atoms; and

a rubber (A1) selected from natural rubber, styrene-butadiene copolymer rubber, butadiene rubber, isoprene rubber, acrylonitrile-butadiene copolymer rubber, chloroprene rubber, butyl rubber and halogenated butyl rubber; in which method the flavan compound is compounded at a temperature of 120-180°C to obtain an unvulcanized rubber composition; and the rubber composition is then vulcanized in the presence of a vulcanization agent.

2. A method according to Claim 1 wherein one or both of X and Y in formula (I) represent hydrogen.

3. A method according to Claim 1 wherein the flavan compound is 2,4,4-trimethy1-2',4',7-trihydroxyflavan.

4. A method according to Claim 1, 2 or 3 wherein the amount of carbon black is 20-150 parts by weight and the amount of the flavan compound is 0.5-10 parts by weight, per 100 weight parts of the rubber (A1).

5. A method according to any one of the preceding claims wherein the carbon black and the flavan compound are compounded together with the rubber (A1) at a temperature of 130-180°C.

6. A method according to any one of the preceding claims wherein sulfur is used as a vulcanization agent and, after compounding and kneading of the carbon black, the flavan compound and the rubber (A1) is completed, the sulfur is compounded with the rubber composition obtained at a temperature of 40-120°C.

7. A method according to any one of the preceding claims which further comprises compounding an antidegradant selected from N-phenyl-N'-1,3-dimethylbutyl-p-phenylenediamine and a polymerization compound of 2,2,4-trimethyl-1,2-dihydroquinoline.

8. A rubber composition which comprises:
(A2) 100 parts by weight of a rubber selected from natural rubber, styrene-butadiene copolymer rubber, butadiene rubber, isoprene rubber, acrylonitrile-butadiene copolymer rubber, chloroprene rubber, butyl rubber and halogenated butyl rubber;
(Bb) 0.5-10 parts by weight of a flavan compound as defined in Claim 1;
(C) 0.05-1 part by weight, expressed as the amount of cobalt, of cobalt carbonate or an organic cobalt compound; and
(D) 0.5-6 parts by weight of a methylene donor selected from a condensation product of melamine and formaldehyde, of melamine, formaldehyde and methanol, or hexamethylenetetramine.

9. A rubber composition according to Claim 8 wherein one or both of X and Y in formula (I) represent hydrogen.

10. A rubber composition according to Claim 8 wherein the flavan compound is 2,4,4-trimethyl-2',4',7-trihydroxyflavan.

11. A rubber composition according to any one of Claims 8 to 10 wherein component (C) is cobalt (II) carbonate.

12. A rubber composition according to any one of Claims 8 to 11 wherein the methylene donor (D) is a condensation product containing hexakis(methoxymethyl)melamine.

13. A rubber composition according to any one of Claims 8 to 12 which further comprises 20-150 parts by weight of carbon black, per 100 parts by weight of the rubber (A2).

14. A method for producing a vulcanized rubber which comprises vulcanizing a composition according to any one of Claims 8 to 13.

15. A method according to Claim 14 in which the composition is in contact with a steel cord.

16. A shaped article which comprises a vulcanized rubber prepared by a method according to any one of Claims 1 to 7, 14 and 15.

17. A tyre which comprises a vulcanized rubber prepared by a method according to any one of Claims 1 to 7, 14 and 15.

European Patent Office

# EUROPEAN SEARCH REPORT

Application Number
EP 95 30 1782

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | DATABASE WPI<br>Section Ch, Week 8341<br>Derwent Publications Ltd., London, GB;<br>Class A12, AN 83-785855<br>& JP-A-58 147 444 ( SUMITOMO CHEMICAL KK)<br>, 2 September 1983<br>* abstract * | 1-6 | C08K5/15<br>C08L21/00 |
| A | EP-A-0 581 618 (SUMITOMO CHEMICAL CO) 2 February 1994<br>* abstract; claim 10 *<br>* page 7, line 5 - line 12 * | 1,5,6 | |
| A | US-A-5 268 402 (DAIO MASAYOSHI ET AL) 7 December 1993<br>* abstract; claims; examples * | 1,8,16, 17 | |
| | | | TECHNICAL FIELDS SEARCHED (Int.Cl.6) |
| | | | C08K |

The present search report has been drawn up for all claims

| Place of search | Date of completion of the search | Examiner |
|---|---|---|
| THE HAGUE | 28 June 1995 | Mettler, R-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)